# FASCICULE DE BREVET EUROPEEN

(11) **EP 0 967 711 B1**
(45) Date de publication et mention de la délivrance du brevet: **26.08.2009**
(21) Numéro de dépôt: 99111700.3
(22) Date de dépôt: 17.06.1999
(51) Int. Cl.: H02K 5/24, F16F 15/02

(54) **Combinaison d'une machine électrique tournante et d'un support**
Kombination einer elektrischen Drehmaschine und eines Trägers
Combination of an electrical rotating machine and a support

(30) Priorité: 25.06.1998 FR 9808074
(43) Date de publication de la demande: 29.12.1999
(73) Titulaire: VALEO EQUIPEMENTS ELECTRIQUES MOTEUR, 94017 Creteil (FR)
(72) Inventeur: Couvert, Pascal, 94700 Maisons Alfort (FR); Grand, Pierrick, 77420 Champs sur Marne (FR); Faverolle, Pierre, 75020 Paris (FR); Dardenne, Francois, 62630 Lefaux (FR)
(74) Mandataire: Gamonal, Didier

(56) Documents cités:
- EP-A- 0 847 127
- DE-U- 8 915 249
- FR-A- 2 575 252
- GB-A- 2 221 803
- US-A- 5 449 153
- US-A- 5 574 324

## Description

La présente invention concerne les combinaisons de machine électrique tournante et d'un support, notamment les alternateurs de véhicule automobile.

Il y a plusieurs années, le bruit global d'une voiture couvrait celui de l'alternateur. Or, ce n'est plus le cas aujourd'hui et l'alternateur, machine électrique tournante, constitue une source de bruit audible. Par ailleurs, les exigences réglementaires en matière de bruit sont à la fois plus présentes et plus pressantes. La réduction des émissions sonores occasionnées par un véhicule est donc un objectif à prendre en compte dès la conception du véhicule, et par conséquent dès la conception de l'alternateur. De plus, nous aurons besoin d'appareils d'une puissance plus importante afin d'électrifier des fonctions nouvelles, jusque là entraînées mécaniquement : les pompes à eau, à air, à vide, de direction assistée, ou encore de climatisation. Enfin, le bruit devient, pour les automobiles, une caractéristique parmi d'autres, appréciable de manière subjective par un acheteur, qui peut désormais établir un comparatif entre différents modèles, de sorte qu'il peut s'agir d'un véritable critère de choix pour l'achat d'un véhicule.

De plus, il faut savoir que l'écran acoustique de l'habitable d'un véhicule est généralement conçu pour atténuer les bruits provenant du moteur en propre et qu'il n'atténue pas les bruits provenant de l'alternateur, qui ont une fréquence plus élevée. Pour une plage de vitesse de l'alternateur située entre 1 500 et 8 000 tours par minute, le bruit émis par l'alternateur est qualifié de bruit magnétique et le niveau global du son est essentiellement constitué par un harmonique principal. Ainsi, pour un alternateur triphasé à six paires de pôles, il s'agira de l'harmonique 36 (3 x 6 x 2 = 36). On cherche donc prioritairement à réduire le bruit associé à cet harmonique. Pour réduire ce bruit de l'alternateur, il est connu de fixer l'alternateur rigidement à son support par une patte supérieure avant et une patte inférieure arrière, le troisième appui constitué par la patte inférieure avant étant soit supprimé, soit réalisé par découplage au moyen de l'interposition entre cette patte et le support d'un patin amortisseur en caoutchouc. Toutefois, ces deux techniques impliquent chacune une dégradation de la tenue mécanique de la fixation de l'alternateur.

Le document FR 2 575 252 montre un alternateur avec son support.

Un but de l'invention est de réduire le bruit généré par une machine électrique tournante telle qu'un alternateur sans nuire à sa tenue mécanique.

En vue de la réalisation de ce but, on prévoit selon l'invention une combinaison selon la revendication 1.

On constate que la fixation de la machine au moyen d'une face de contact ou d'appui ainsi limitée permet d'obtenir un bon découplage et de réduire de façon très importante le bruit qu'elle génère. De plus, ce mode de fixation ne menace pas la tenue mécanique de la machine qui demeure fixée au support par trois points. Cette solution est facile à mettre en oeuvre pour un faible coût.

La machine de la combinaison selon l'invention pourra également présenter au moins l'une des caractéristiques suivantes :
- la patte présente au moins une rainure s'étendant dans le plan de la face de contact ;
- la rainure est radiale à l'axe du conduit ;
- la patte présente plusieurs rainures de configurations différentes entre elles et/ou disposées non symétriquement entre elles par rapport à l'axe ;
- la face de contact présente des bords interne et externe séparés par une distance inférieure à une distance séparant des faces interne et externe de la patte ;
- la patte présente au moins une échancrure en arc de cercle s'étendant dans le plan de la face de contact et débouchant à un bord externe de la face de contact ;
- la patte présente au moins un évidement circulaire distinct du conduit et s'étendant dans le plan de la face de contact ;
- la face de contact a une forme générale annulaire, notamment continue ou discontinue ;
- la patte présente une zone profilée suivant l'axe du conduit, la face de contact s'étendant à une extrémité de cette zone ; et
- la machine est un alternateur de véhicule.

D'autres caractéristiques et avantages de l'invention apparaîtront encore dans la description suivante d'un mode préféré de réalisation et de variantes donnés à titre d'exemples non limitatifs. Aux dessins annexés :
- les figures 1, 2 et 3 illustrent schématiquement trois modes de vibration d'un corps sphérique ;
- les figures 4 et 5 illustrent deux de ces modes dans le cas d'un alternateur ;
- les figures 6 et 7 sont deux vues de droite et de face d'un alternateur selon l'invention ;
- la figure 8 est une vue partielle en coupe de la patte inférieure avant selon le plan VIII-VIII de la figure 7; et
- les figures 9 à 14 montrent respectivement six variantes de réalisation de la patte.

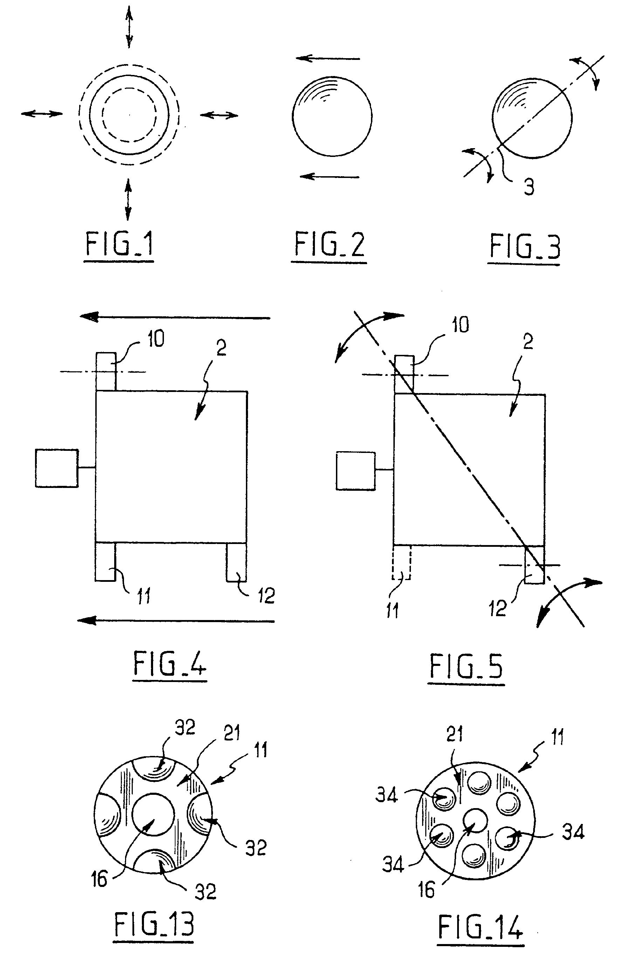

On sait que les vibrations d'un corps, qui déplacent de l'air et génèrent du bruit, peuvent se produire suivant différents modes. On a illustré aux figures 1, 2 et 3 pour une sphère les trois modes de vibration appelés respectivement pulsation, translation et torsion. Les deux premiers modes, cylindre et translation, sont rayonnants et donc bruyants. Le mode de translation est représenté à la figure 4 pour l'alternateur 2. En revanche, le mode de torsion, aux figures 3 et 5, est non rayonnant et donc relativement silencieux. Il consiste en une torsion alternative du corps autour d'un axe 3 passant par ses deux points de fixation principaux. On cherche ici à favoriser ce mode de vibration sur l'alternateur 2. Celui-ci étant fixé à son support par deux pattes avant 10, 11 et une patte arrière 12, privilégier le mode de torsion revient à rigidifier la fixation de la patte arrière 12 et à "alléger" autant que possible la fixation de la patte avant 11 la plus proche de celle-ci. L'alternateur 2 en mode de torsion est illustré à la figure 5. (Le cas extrême consiste à supprimer cette patte avant 11 pour obtenir un axe de torsion 3 passant exactement par le centre de l'appareil.)

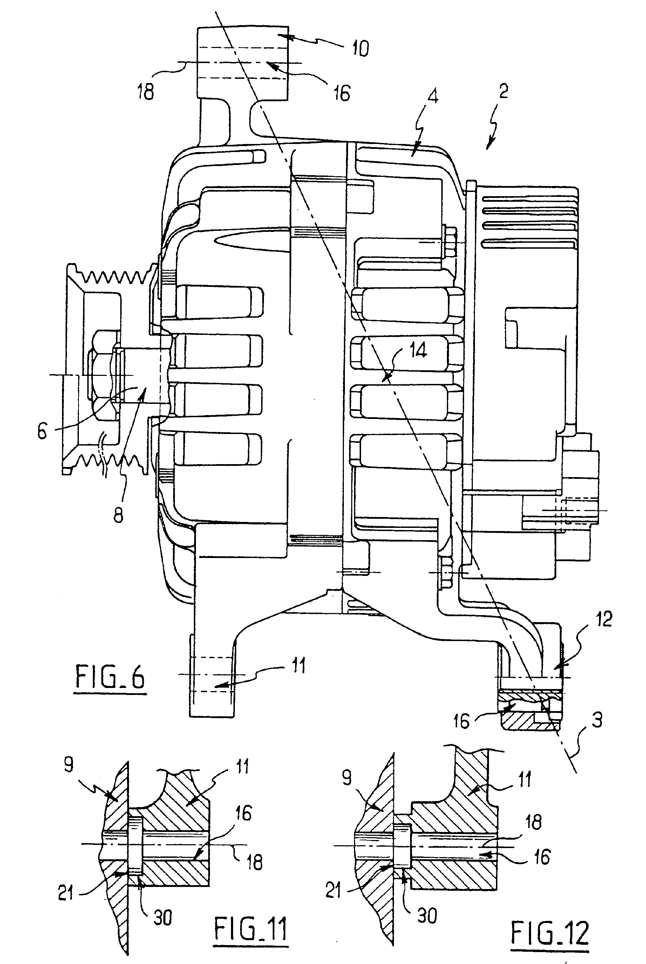

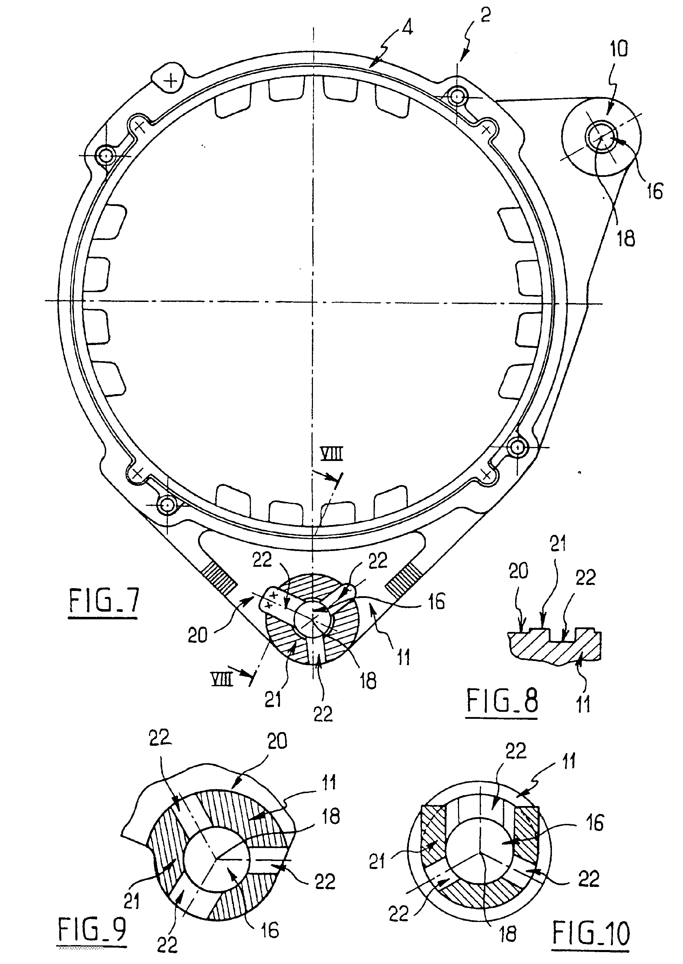

Plus précisément, en référence aux figures 6 et 7, l'alternateur de véhicule 2 comprend un carter fermé 4 à une extrémité axiale duquel émerge une extrémité externe 6 d'un arbre 8 de l'alternateur. Le carter 4 comporte trois pattes 10, 11, 12 pour la fixation de l'alternateur 2 à un support 9 solidaire du châssis du véhicule. Les pattes 10 et 11 s'étendent à l'avant, à proximité de l'extrémité externe 6 de l'arbre, respectivement en parties avant supérieure et inférieure du carter sur la figure 6. La patte 12 se trouve à l'arrière et est plus éloignée de l'extrémité externe 6 de l'arbre que les pattes avant 10, 11. Cette patte 12 est inférieure et se trouve sensiblement au droit de la patte avant inférieure 11 parallèlement à l'arbre 8. Par ailleurs, elle se trouve sensiblement à l'opposé de la patte supérieure avant 10 par rapport à un centre 14 de l'alternateur. Les deux pattes supérieure avant 10 et inférieure arrière 12 sont prévues pour être chacune rigidement fixées au support 9 de façon connue en soi. Elles présentent à cette fin un conduit 16 d'axe 18 pour la réception d'un élément de fixation tel qu'une vis.

La patte inférieure avant 11 présente elle aussi un tel conduit 16 d'axe 18. Elle présente une face avant plane 20 perpendiculaire à l'axe 18 et, en légère saillie de celle-ci, une partie d'appui limitée par une face d'appui ou de contact plane 21 perpendiculaire à l'axe 18. La face de contact 21 a en plan une forme générale annulaire centrée sur l'axe 18, limitée par un bord circulaire externe et un bord circulaire interne. Cette patte 11 présente des rainures 22, ici au nombre de trois, s'étendant dans la partie d'appui et la face de contact 21 dans un plan commun perpendiculaire à l'axe 18 et suivant une direction radiale à celui-ci. La face de contact 21 est ainsi délimitée par ses bords interne et externe, et par les trois rainures 22 qui la divisent en trois portions distinctes distantes les unes des autres. La face de contact 21 ne s'étend que sur une fraction de la face avant 20 de la patte 11. La face de contact 21 a une superficie qui constitue un minimum par rapport à la superficie de la face avant 20 et aux superficies des sections transversales de la patte 11 le long du conduit 16 perpendiculairement à l'axe 18.

La fixation de cette patte 11 est effectuée de sorte que la face de contact 21 vient en contact surfacique avec une surface plane du support 9 où débouche un conduit. On fixe la patte 11 par exemple au moyen d'une vis reçue dans le conduit 16 avec un serrage tel qu'on dépasse la limite élastique du matériau de la patte 11 qui est ici un métal.

On constate qu'une telle fixation de l'alternateur 2 au support 9 lui permet en fonctionnement de vibrer suivant un mode de torsion autour de l'axe de torsion 3 passant par la patte avant supérieure 10 et la patte arrière inférieure 12. La patte avant inférieure 11 à face de contact réduite 21 réalise un découplage en vibration par rapport au support 9, autorisant ainsi, malgré la présence de ce troisième point de fixation, une vibration en mode de torsion. Dans le cas d'un alternateur 2 triphasé à six pôles, on réduit très sensiblement le bruit associé à l'harmonique 36 et donc le bruit général de l'alternateur. De plus, la fixation robuste de cette patte 11 entraîne une bonne tenue mécanique de l'alternateur.

On peut réaliser les rainures 22 par fraisage, ou directement par moulage lors de la fabrication de la pièce du carter qui porte la patte 11. La superficie de la face de contact 21 est par exemple réduite à 135 mm² ou 131 mm². En l'espèce, l'une des rainures 22 est plus large que les deux autres qui sont identiques entre elles, et les rainures 22 sont ici disposées avec leurs axes symétriques autour de l'axe 18. Alternativement, on pourrait les configurer toutes les trois à l'identique mais en les disposant de façon dissymétrique autour de l'axe 18. Dans un cas comme dans l'autre, ces caractéristiques permettent à la même patte 11 de s'adapter à des supports 9 ayant des formes, des dimensions et/ou des configurations différentes les unes des autres en garantissant un minimum de surface commune de contact entre la patte 11 et le support 9.

Sur la variante de la figure 9, le bord externe de la face de contact 21 présente deux tronçons circulaires concentriques mais de rayons différents, le tronçon du bord externe le plus proche de l'arbre 8 ayant le plus grand rayon. Il s'ensuit ici encore une configuration dissymétrique des rainures 22 et plus généralement de la face de contact 21.

Sur la variante de la figure 10, la face de contact 21, à nouveau divisée en trois tronçons, a une forme générale en "U" ou en fer à cheval, les deux branches du "U" étant séparées l'une de l'autre par l'une des trois rainures 22.

Dans les variantes des figures 11 et 12, la face de contact 21 s'étend à une extrémité d'une zone 30 de la patte 11 profilée suivant l'axe 18 du conduit 16. La face externe de la patte est dans les deux cas de forme cylindrique coaxiale à cet axe. La face interne cylindrique de la zone profilée 30 est en retrait vers l'extérieur par rapport au conduit 16. Dans la variante de la figure 11, la zone profilée 30 a une face externe cylindrique prolongeant celle de la patte. Dans la variante de la figure 12, cette face externe est en retrait vers l'intérieur par rapport à la face externe de la patte. Ainsi, dans les deux cas, la face de contact 21 présente des bords externe et interne séparés par une distance inférieure à celle séparant les faces interne et externe de la patte. Dans les deux cas, on obtient une face d'appui 21 de forme annulaire continue dont la superficie constitue un minimum par rapport aux sections transversales de la patte 11 le long du conduit 16 perpendiculairement à l'axe 18.

Dans la variante de la figure 13, la patte 11 présente des échancrures 32, s'étendant en creux dans le plan de la face 21, ayant un bord en arc de cercle et débouchant au bord externe de la face 21. Les échancrures sont ici au nombre de quatre et sont réparties autour du conduit 16. Les échancrures ont par exemple un fond de forme sphérique concave.

Dans la variante de la figure 14, la patte 11 présente des évidements 34 s'étendant en creux dans le plan de la face de contact 21 et ayant chacun un bord circulaire ininterrompu distant du bord externe de la patte et du conduit 16. Les évidements 34 ou orifices borgnes sont ici au nombre de six et sont régulièrement répartis autour du conduit 16. Ils présentent un fond convexe.

Ces six variantes permettent elles aussi d'obtenir le découplage précité.

Alternativement, on pourra prévoir que la face de contact 21 à superficie limitée s'étend sur la partie du support 9 destinée à recevoir la patte 11, et non pas sur celle-ci. Il suffit alors par exemple de lire les figures 11 et 12 en considérant que leur partie gauche représente l'alternateur 2 et leur partie droite le support 9.

En outre, on pourra prévoir que la patte 11 de l'alternateur a une face de contact 21 limitée par rapport au reste de la patte tel que décrit plus haut, et que le support 9 lui aussi présente simultanément une face de contact limitée par rapport au reste du support destinée à venir en appui sur celle de l'alternateur.

Aux alentours de 2 000 tours par minute pour la vitesse de l'alternateur, l'invention permet par exemple de réaliser un gain de l'ordre de 7 à 15 décibels.

## Revendications

1. Combinaison d'une machine électrique tournante (2) et d'un support (9), la machine comprenant une extrémité externe (8) d'arbre (6), deux pattes de fixation avant (10, 11) et une patte de fixation arrière (12) plus éloignée de l'extrémité d'arbre que les pattes avant; l'une (11) des pattes avant la plus proche de la patte arrière et le support (9) présentant chacun un conduit (16), au moins l'un (11) parmi ceux-ci présentant une face de contact (21) perpendiculaire à un axe (18) du conduit pour l'appui de la patte (11) sur le support (9), la face de contact (21) ayant une superficie constituant un minimum par rapport aux superficies des sections d'au moins l'un parmi la patte et le support le long du conduit perpendiculairement à l'axe, **caractérisée en ce que** la patte avant (11) la plus proche de la patte arrière (12) est fixée au support (9) avec un serrage tel qu'on dépasse la limite élastique du materiau de la patte.

2. Combinaison selon la revendication 1, **caractérisée en ce que** la patte (11) la plus proche de la patte arrière (12) présente au moins une rainure (22) s'étendant dans le plan de la face de contact (21).

3. Combinaison selon la revendication 2, **caractérisée en ce que** la rainure (22) est radiale à l'axe (18) du conduit.

4. Combinaison selon la revendication 2 ou 3, **caractérisée en ce que** la patte (11) la plus proche de la patte arrière (12) présente plusieurs rainures (22) de configurations différentes entre elles et/ou disposées non symétriquement entre elles par rapport à l'axe (18)

5. Combinaison selon l'une quelconque des revendications 1 à 4, **caractérisée en ce que** la face de contact (21) présente des bords interne et externe séparés par une distance inférieure à une distance séparant des faces interne et externe de la patte (11) la plus proche de la patte arrière (12).

6. Combinaison selon l'une quelconque des revendications 1 à 5, **caractérisée en ce que** la patte (11) la plus proche de la patte arrière (12) présente au moins une échancrure (32) en arc de cercle s'étendant dans le plan de la face de contact (21) et débouchant à un bord externe de la face de contact.

7. Combinaison selon l'une quelconque des revendications 1 à 6, **caractérisée en ce que** la patte (11) la plus proche de la patte arrière (12) présente au moins un évidement circulaire (34) distinct du conduit et s'étendant dans le plan de la face de contact (21).

8. Combinaison selon l'une quelconque des revendications 1 à 7, **caractérisée en ce que** la face de contact (21) a une forme générale annulaire, notamment continue ou discontinue.

9. Combinaison selon l'une quelconque des revendications 1 à 8, **caractérisée en ce que** la patte (11) la plus proche de la patte arrière (12) présente une zone (30) profilée suivant l'axe (18) du conduit, la face de contact (21) s'étendant à une extrémité de cette zone.

10. Combinaison selon l'une quelconque des revendications 1 à 9, **caractérisée en ce que** la machine est un alternateur de véhicule.

## Claims

1. Combination of a rotary electric machine (2) and a support (9), the machine comprising an outer end (8) of a shaft (6), two front securing lugs (10, 11) and a rear securing lug (12) which is further away from the shaft end than the front lugs, one (11) of the front lugs which is closest to the rear lug and the support (9) each having a duct (16), at least one (11) from amongst these having a contact face (21) which is perpendicular to an axis (18) of the duct, for support of the lug (11) on the support (9), the contact face (21) having a surface which constitutes a minimum in relation to the surfaces of the cross-sections of at least one from amongst the lug and the support along the duct, perpendicular to the axis, **characterised in that** the front lug (11) which is closest to the rear lug (12) is secured to the support (9) with clamping such that the elastic limit of the material of the lug is exceeded.

2. Combination according to claim 1, **characterised in that** the lug (11) which is closest to the rear lug (12) has at least one groove (22) which extends in the plane of the contact face (21).

3. Combination according to claim 2, **characterised in that** the groove (22) is radial relative to the axis (18) of the duct.

4. Combination according to claim 2 or claim 3, **characterised in that** the lug (11) which is closest to the rear lug (12) has a plurality of grooves (22) with configurations which are different from one another, and/or are arranged non-symmetrically relative to one another in relation to the axis (18).

5. Combination according to any one of claims 1 to 4, **characterised in that** the contact face (21) has inner and outer edges which are separated by a distance which is smaller than a distance which separates inner and outer faces of the lug (11) which is closest to the rear lug (12).

6. Combination according to any one of claims 1 to 5, **characterised in that** the lug (11) which is closest to the rear lug (12) has at least one cut-out (32) in the form of an arc of a circle which extends on the plane of the contact face (21) and opens on an outer edge of the contact face.

7. Combination according to any one of claims 1 to 6, **characterised in that** the lug (11) which is closest to the rear lug (12) has at least one circular recess (34), which is distinct from the duct and extends on the plane of the contact face (21).

8. Combination according to any one of claims 1 to 7, **characterised in that** the contact face (21) has a generally annular form, which in particular is continuous or discontinuous.

9. Combination according to any one of claims 1 to 8, **characterised in that** the lug (11) which is closest to the rear lug (12) has an area (30) which is profiled according to the axis (18) of the duct, the contact face (21) extending at one end of this area.

10. Combination according to any one of claims 1 to 9, **characterised in that** the machine is a vehicle alternator.

## Patentansprüche

1. Kombination aus einer rotierenden elektrischen Maschine (2) und einem Träger (9), wobei die Maschine ein äußeres Ende (8) einer Welle (6), zwei vordere Befestigungsansätze (10, 11) und einen hinteren Befestigungsansatz (12) umfasse der vorn Wellenende weiter entfernt ist als die vorderen Ansätze, wobei einer (11) der vorderen Ansätze, der dem hinteren Ansatz am nächsten angeordnet ist, und der Träger (9) jeweils einen Kanal (16) aufweisen und wenigstens eines (11) dieser Elemente eine zu einer Achse (18) des Kanals senkrechte Kontaktfläche (21) für die Anlage des Ansatzes (11) am Träger (9) aufweist, wobei die Kontaktfläche (21) einen Flächeninhalt besitzt, der ein Minimum bezogen auf die Flächeninhalte der Querschnitte wenigstens eines der Elemente Ansatz und Träger entlang dem Kanal senkrecht, zur Achse darstellt, **dadurch gekennzeichnet, dass** der dem hinteren Ansatz (12) am nächsten angeordnete vordere Ansatz (11) am Träger (9) mit einer Klemmung befestigt ist, die so ausfällt, dass die Elastizitätsgrenze des Werkstoffs des Ansatzes überschritten wird.

2. Kombination nach Anspruch 1, **dadurch gekennzeichnet, dass** der dem hinteren Ansatz (12) am nächsten angeordnete Ansatz (11) wenigstens eine Nut (22) aufweist, die sich in der Ebene der Kontaktfläche (21) erstreckt.

3. Kombination nach Anspruch 2, **dadurch gekennzeichnet, dass** die Nut (22) radial zur Achse (18) des Kanals verläuft.

4. Kombination nach Anspruch 2 oder 3, **dadurch gekennzeichnet, dass** der dem hinteren Ansatz (12) am nächsten angeordnete Ansatz (11) mehrere Nuten (22) aufweist, die untereinander unterschiedliche Gestaltungen haben und/oder untereinander nicht bezogen auf die Achse (18) angeordnet sind.

5. Kombination nach einem der Ansprüche 1 bis 4, **dadurch gekennzeichnet, dass** die Kontaktfläche (21) Innen- und Außenkanten aufweist, die durch einen Abstand voneinander getrennt sind, der Kleiner als ein Abstand ist, der Innen- und Außenflächen des dem hinteren Ansatz (12) am nächsten angeordneten Ansatzes (11) trennt.

6. Kombination nach einem der Ansprüche 1 bis 5, **dadurch gekennzeichnet, dass** der dem hinteren Ansatz (12) am nächsten angeordnete Ansatz (11) wenigstens, eine kreisbogenförmige Aussparung (32) aufweist, die sich in der Ebene der Kontaktfläche (21) erstreckt, und an einer Außenkante der Kontaktfläche mündet.

7. Kombination nach einem der Ansprüche 1 bis 6, **dadurch gekennzeichnet, dass** der dem hinteren Ansatz (12) am nächsten angeordnete Ansatz (11) wenigstens eine kressförmige Ausnehmung (34) aufweist die vom Kanal verschieden ist und sich in der Ebene der Kontaktfläche (21) erstreckt.

8. Kombination nach einem der Anspruche 1 bis 7, **dadurch gekennzeichnet, dass** die Kontaktfläche (21) eine, insbesondere durchgehende oder unterbrochene, allgemeine Ringform aufweist.

9. Kombination nach einem der Ansprüche 1 bis 8, **dadurch gekennzeichnet, dass** der dem hinteren Ansatz (12) am nächsten angeordnete Ansatz (11) einen profilierten Bereich (30) in Richtung der Achse (18) des Kanals aufweist, wobei sich die Kontaktfläche (21) an einem Ende dieses Bereichs erstreckt.

10. Kombination nach einem der Ansprüche 1 bis 9, **dadurch gekennzeichnet, dass** es sich bei der Maschine um einen Wechselstromgenerstor für Fahrzeuge handelt.
